# EUROPÄISCHE PATENTSCHRIFT

(11) **EP 0 919 746 B1**
(45) Veröffentlichungstag und Bekanntmachung des Hinweises auf die Patenterteilung: **26.06.2002**
(21) Anmeldenummer: 98122330.8
(22) Anmeldetag: 25.11.1998
(51) Int. Cl.: F16H 25/18, A47C 20/04, A61G 7/018

(54) **Antriebsvorrichtung für hin- und hergehende Schwenkbewegungen**
Driving device for an alternating rotary movement
Dispositif d'entraînement pour mouvement pivotant aller et retour

(30) Priorität: 26.11.1997 DE 19752234; 03.11.1998 DE 29819647 U; 03.11.1998 DE 29819649 U
(43) Veröffentlichungstag der Anmeldung: 02.06.1999
(73) Patentinhaber: Hanning Elektro-Werke GmbH & Co. KG, 33813 Oerlinghausen (DE)
(72) Erfinder: Überschär, Reinhard, 33719 Bielefeld (DE)
(74) Vertreter: TER MEER STEINMEISTER & PARTNER GbR

(56) Entgegenhaltungen:
- DE-U- 29 607 493
- GB-A- 2 205 232
- US-A- 3 651 711

## Beschreibung

Die Erfindung betrifft eine Antriebsvorrichtung für hin- und hergehende Schwenkbewegungen, insbesondere zum Verstellen von Krankenbetten und anderen Möbelstücken, mit einem Motor, einem diesem nachgeschalteten Getriebe zum Umwandeln der Drehbewegung des Motors in eine Linearbewegung und einem mit einem linear beweglichen Ausgangselement des Getriebes verbundenen, schwenkbaren Hebelarm, wobei der schwenkbare Hebelarm in einem ersten Winkelbereich der Schwenkbewegung mit dem Ausgangselement nur in Vorschubrichtung in Antriebsverbindung steht und wobei der Hebelarm in einem zweiten Winkelbereich bewegbar ist

Eine Antriebsvorrichtung dieser Art ist aus der US-A-3 651 711 bekannt. Diese Druckschrift befaßt sich mit einer Einrichtung zur Drehung der Ventilspindel eines Ventils. Sie umfaßt einen Motor und ein diesem nachgeschaltetes Getriebe und ermöglicht hin- und hergehende Drehbewegungen der Ventilspindel.

Hin- und hergehende Drehbewegungen werden auch bei Krankenbetten zur Verstellung des Kopfteils oder Fußteils oder auch bei anderen Antrieben für verstellbare Möbel eingesetzt.

Insbesondere kommt auch eine Anwendung der Erfindung für Betten im allgemeinen, für Sessel, für Autositze, etc. in Betracht. In Fällen dieser Art soll die Antriebsvorrichtung mit dem schwenkbaren Hebel, etwa als Element der Rückenlehne, nur in einer Schwenkrichtung zwangsgekoppelt sein, während die Rückenlehne in die Ausgangsstellung unter Schwerkrafteinfluß absinken soll. Eine Zwangskoppelung bei der Abwärtsbewegung der Rückenlehne würde eine Verletzungsgefahr für den Benutzer bedeuten, wenn dieser etwa mit der Hand zwischen die Rückenlehne und das Bettgestell geriete. Bei Antriebsbewegungen dagegen, die der Schwerkraft oder anderen Kräften entgegenwirken, kann eine Zwangskopplung in beiden Richtungen notwendig sein.

Moderne Krankenbettgestelle besitzen zumeist nicht nur eine anhebbare Rückenlehne, sondern auch anhebbare Teile im mittleren und im Fußbereich. Eine weitere Verstellmöglichkeit führt zur Körperschräglage, bei der die Liegefläche vom Kopfbereich zum Fußbereich allmählich abfällt. Üblicherweise erfolgen diese Verstellvorgänge innerhalb eines lose in ein Bettgestell einlegbaren Rahmens, insbesondere Lattenrostrahmens. In jedem Falle werden bei den verfügbaren verstellbaren Betten für die einzelnen Bewegungsvorgänge jeweils gesonderte Motoren vorgesehen. Diese Motoren zusammen mit den zugehörigen Antriebsvorrichtungen führen jedoch zu hohen Herstellungskosten und einem relativ hohen Gewicht des Bettgestells.

Der Erfindung liegt daher die Aufgabe zugrunde, eine Antriebsvorrichtung der obigen Art zu schaffen, die es gestattet, alternativ zwei verschiedene Schwenkvorgänge auszulösen.

Diese Aufgabe wird durch die Merkmale des Anspruchs 1 gelöst.

Aufgrund dieser Merkmale besteht die Möglichkeit, beispielsweise sowohl die Rückenlehne als auch den mittleren oder den Fußbereich eines verstellbaren Bettgestells alternativ anzuheben und abzusenken.

Allgemein ausgedrückt geschieht dies dadurch, daß auf der einen Seite die Rückenlehne durch die Antriebsvorrichtung angehoben und abgesenkt werden kann und andererseits, sobald die Rückenlehne in ihre untere Ausgangsposition auf dem Gestellrahmen zurückgekehrt ist, die Antriebsvorrichtung durch weiteres Einziehen des Hebelarms ihrerseits angezogen wird und dabei beispielsweise den mittleren Bereich der Liegefläche oder die gesamte Liegefläche anhebt, während der Hebelarm auf dem Bettgestell fest abgestützt wird.

Vorzugsweise ist das bewegliche Kupplungsglied an dem Ausgangselement des Getriebes oder dem Hebelarm ein vorgesehen, das beim Eintritt des Hebelarms in den zweiten Winkelbereich den Hebelarm und das Ausgangselement des Antriebs miteinander koppelt.

In diesem Zusammenhang ist zu beachten, daß die beiden Winkelbereiche definiert werden in bezug auf eine Schwenkung zwischen dem Hebelarm einerseits und dem Getriebe der Antriebsvorrichtung andererseits, nicht dagegen auf eine Schwenkung des Hebelarms im Raum.

Vorzugsweise ist das Kupplungsglied an dem Ausgangselement angebracht. Bei Eintritt des Ausgangselements in die den zweiten Winkelbereich entsprechende Stellung läuft das Kupplungsglied auf eine die Koppelung bewirkende Nockenfläche auf.

Das Kupplungsglied kann als schwenkbarer Haken ausgebildet sein, der den Hebelarm beim Eintritt in den zweiten Winkelbereich umgreift.

Bevorzugt ist eine Anordnung, bei der der Hebelarm in Richtung des Ausgangselements des Getriebes in dem ersten Winkelbereich vorgespannt ist, z.B. sich durch Schwerkraft an dem Ausgangselement abstützt.

Bei bevorzugten Ausführungsformen ist der Hebelarm über einen entriegelbaren Kupplungsmechanismus mit einer Welle verbunden, die ihrerseits das zu schwenkende Bauteil, beispielsweise die Rückenlehne eines Krankenbettes trägt. Der entriegelbare Kupplungsmechanismus ermöglicht eine Verstellung der Neigung der Rückenlehne von Hand, etwa im Falle eines Stromausfalles. Der entriegelbare Kupplungsmechanismus wird dadurch gebildet, daß der Hebelarm drehbar auf der Welle gelagert ist und daß eine drehfeste und axial verschiebbare Hülse auf der Welle angeordnet ist, die in Richtung des Hebelarms vorgespannt ist und mit diesem zusammenwirkende Eingriffsglieder aufweist.

Bei einer anderen Ausführungsform der Erfindung ist als Ausgangselement des Motors nicht eine Druckplatte, wie bei der bisher geschilderten Ausführungsform, sondern ein Druckhebel vorgesehen, der mit einer Gewindemutter verbunden ist, die auf einer von dem Motor ausgehenden Gewindespindel hin- und hergehend beweglich ist. Der Druckhebel ist um die Achse des schwenkbaren Hebelarms frei und unabhängig von dem schwenkbaren Hebelarm schwenkbar. Bei der Schwenkung des Druckhebels in eine erste Richtung tritt ein von dem schwenkbaren Hebelarm ausgehender Stift in die Bahn des Druckhebels, so daß der schwenkbare Hebelarm mitgenommen wird. Dabei handelt es sich um die erste Antriebsbewegung innerhalb des zuvor definierten ersten Winkelbereichs. Der Stift kann gegen Federwirkung aus der Bahn des Druckhebels zurückgezogen werden, so daß die Verstellung des Möbelteils, etwa des Kopfteils oder Fußteils eines Betts, rückgängig gemacht werden kann, wenn der Antrieb etwa wegen Stromausfalls versagt oder aus medizinischen Gründen eine rasche Notabsenkung erforderlich ist.

Die Koppelung zwischen den beiden Hebeln in die andere Richtung erfolgt durch einen zweiten Stift, der ebenfalls in dem Hebelarm angeordnet ist und bei der Rückzugsbewegung der Spindelmutter und des Druckhebels auf eine seitlich des Hebelarms angeordnete Nockenfläche aufläuft und erst dadurch in die Bahn des Druckhebels eintritt.

Wenn in der Praxis beim Übergang vom ersten in den zweiten Winkelbereich das von dem schwenkbaren Hebelarm angetriebene Teil, also etwa ein Schwenkarm, der unter das Kopfteil oder das Fußteil eines Lattenrosts aus Einlegerahmens in einem Bett greift und dieses anhebt, in seine untere Endstellung gekommen ist, in der der Schwenkarm auf dem Bettgestell aufliegt, bedeutet die weitere Schwenkung des Hebelarms nach unten, daß sich der gesamte Lattenrost oder Einlegerahmen anhebt, wie dies bereits bei der ersten Ausführungsform geschildert wurde.

Üblicherweise befinden sich die einzelnen Teile des Antriebs in einem Gehäuse aus Kunststoff, das die gesamte Antriebsvorrichtung aufnimmt und daher hier zur Unterscheidung als "Gerätegehäuse" bezeichnet werden soll. Zur Begrenzung der Verstellbewegungen sind Endschalter vorgesehen, die bei bekannten Antrieben in einer festen Position im Inneren des Gerätegehäuses an der Gehäusewand montiert sind und mit denen beispielsweise ein Schaltglied an einem der beweglichen Teile des Antriebs in Berührung kommt.

Angesichts der relativ hohen Reaktionskräfte, die eine Antriebsvorrichtung der vorliegenden Art aufzunehmen hat, kann es bei bestimmten Lastzuständen oder auch dauerhaft zu einer Verformung des Gehäuses und damit zu einer Verlagerung der Schaltpunkte der Endschalter kommen. Es ist daher eine relativ häufige Justierung erforderlich.

Gemäß der vorliegenden Erfindung befinden sich daher die Endschalter auf wenigstens einer Stange, die sich vom Motor oder vom Getriebe aus parallel zur Gewindspindel erstreckt. Auf diese Weise lassen sich die Schaltpunkte des Antriebs sehr genau festlegen.

Bei Antriebsvorrichtungen für hin- und hergehende Bewegungen, insbesondere solchen zum Verstellen von Krankenbetten und anderen Möbelstücken, wird oft gefordert, daß nur die Bewegung in einer Richtung, zumeist die Hubbewegung, mit einem Zwangsantrieb, die gegenläufige Bewegung, zumeist die Absenkbewegung, dagegen nur dadurch erfolgt, daß das angehobene Teil einem zurückweichenden Antriebsglied unter Schwerkrafteinwirkung folgt. Auf diese Weise soll verhindert werden, daß der Benutzer sich dadurch verletzt. daß beispielsweise eine Hand zwischen einer Kopfstütze und dem übrigen Möbelteil eingeklemmt wird.

Wenn bei dieser Absenkbewegung unter Schwerkrafteinfluß das anzutreibende Teil, etwa das Kopfteil eines Bettes, hängenbleibt, etwa aufgrund einer Verkantung, oder weil Bettwäsche zwischen das Kopfteil und das Bettgestell geraten ist, und sich anschließend wieder löst, fällt das angehobene Teil über eine mehr oder weniger große Höhe auf das bereits vorausgelaufende Antriebsglied herab. Dadurch kann beispielsweise der Benutzer eines Bettes einen erheblichen Schreck, ggfs. auch Verletzungen erleiden.

Aus diesem Grunde ist erfindungsgemäß zwischen einem Ausgangselement des Antriebs und einem mit dem anzuhebenden Möbelteil verbundenen Element ein Schalter vorgesehen, der bei der Absenkbewegung einen Schaltvorgang auslöst, wenn sich die beiden zusammenwirkenden Elemente trennen. Dadurch kann der Antrieb abgeschaltet werden, bevor das Antriebsglied weit vorausgelaufen ist.

Im folgenden werden bevorzugte Ausführungsbeispiele der Erfindung anhand der beigefügten Zeichnung näher erläutert.
- Fig. 1: ist eine schematische, teilweise geschnittene und in verschiedenen Ebenen liegende Darstellung einer erfindungsgemäßen Antriebsvorrichtung in ihrer Gesamtheit;
- Fig. 2 bis 5: sind Teildarstellungen der Elemente zur Koppelung des schwenkbaren Hebelarms und des Ausgangselements des Getriebes;
- Fig. 6: ist ein Längsschnitt durch einen Kupplungsmechanismus zur Ver- und Entriegelung des schwenkbaren Hebelarms auf der zugehörigen Welle;
- Fig. 7: ist eine schematische Stirnansicht eines erfindungsgemäßen Antriebs;
- Fig. 8: ist eine Seitenansicht und zeigt eine Reihe von verdeckten Teilen gestrichelt:
- Fig. 9: ist eine Seitenansicht, die Fig. 8 entspricht, jedoch die Verhältnisse an der gegenüberliegenden Seite des Antriebs veranschaulicht;
- Fig. 10: dient zur Erläuterung der Verrastung des Antriebs bei der Bewegung in einem zweiten Winkelbereich;
- Fig. 11: ist eine vereinfachte Seitenansicht eines Antriebs für zwei Stellbewegungen, etwa Kopfteil und Fußteil eines Bettes, mit Darstellung von Endschaltern zur Begrenzung der Verstellwege;
- Fig. 12 bis 14: zeigen eine weitere Einzelheit einer erfindungsgemäßen Antriebsvorrichtung in vereinfachten Darstellungen.

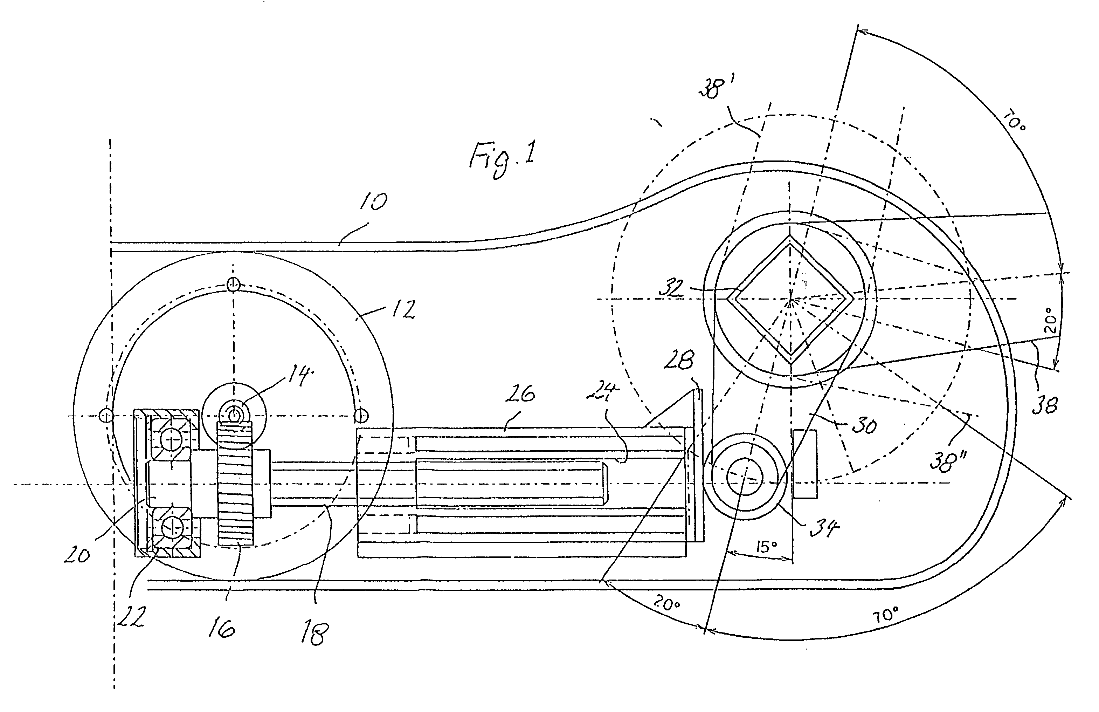

Eine erfindungsgemäße Antriebsvorrichtung weist insgesamt ein nicht näher ausgeführtes Gehäuse 10 auf, in dem sich auf der linken Seite in Fig. 1 ein Motor 12, insbesondere ein Elektromotor befindet. Der Motor 12 besitzt eine Ausgangswelle 14 in der Form einer Schneckenwelle oder Gewindespindel. die mit einem Schnecken-Zahnrad 16 zusammenwirkt, das fest auf einer von links nach rechts in Fig. 1 verlaufenden Gewindespindel 18 angebracht ist. Während sich die Gewindespindel 18 nach rechts von dem Zahnrad 16 erstreckt, befindet sich auf der linken Seite des Zahnrades 16 lediglich ein das Ende der Gewindespindel 18 bildender Wellenstumpf 20, der in einem Kugellager 22 gelagert ist.

Die Gewindespindel 18 tritt in eine Gewindebohrung 24 eines nach links und rechts in Fig. 1 verschiebbaren Schlittens 26 ein, so daß eine Drehung des Motors 12 den Schlitten 26 nach links und rechts in bezug auf Fig. 1 verfahren läßt. Am rechten Ende ist an dem Schlitten 26 eine Druckplatte 28 befestigt.

Die Druckplatte 28 tritt mit einem unteren Ende eines schwenkbaren Hebelarms 30 in Eingriff. Dieser Hebelarm 30 ist auf einer Welle 32 mit quadratischem Querschnitt gelagert, wie später näher erläutert werden soll. An seinem freien, in Fig. 1 unten liegenden Ende ist an dem Hebelarm 30 ein Kugellager 34 auf einem Zapfen 36 drehbar gelagert. Über das Kugellager 34 stützt sich der Hebelarm 30 an der Druckplatte 28 ab. Das Kugellager gestattet eine weitgehend von Reibung freie relative Bewegung zwischen dem Hebelarm 30 und der Druckplatte 28 bei der Hin- und Herbewegung des Schlittens 26.

Es ist somit erkennbar, daß beim Ausfahren des Schlittens 26 nach rechts der Hebelarm 30 über die Druckplatte 28 nach rechts in Fig. 1 gedrückt und damit um die bzw. mit der Welle 32 geschwenkt wird. Dabei ist die Druckplatte 28 lediglich in der Lage, das Kugellager 34 nach rechts in Fig. 1 zu verschieben und damit den Hebelarm in Gegenuhrzeigersinn zu schwenken, während der Hebelarm bei der Rückzugsbewegung des Schlittens 26 nach links frei ist und sich allenfalls über die hier nicht veranschaulichten Vorspannkräfte an der Druckplatte abstützen.

Auf der Welle 32 ist im übrigen ein Schwenkarm 38 befestigt, der in Fig. 1 in einer ersten, in durchgezogenen Linien gezeigten, nach rechts gerichteten Stellung mit 38, in einer aufgerichteten zweiten Stellung mit 38' und in einer nach rechts leicht abwärts geneigten dritten Stellung mit 38" bezeichnet ist. Die in durchgezogenen Linien gezeigte Stellung 38 entspricht der ebenfalls in durchgezogenen Linien gezeigten Stellung des Hebelarms 30. Ausgehend von dieser Winkelposition des Hebelarms 30 sind in Fig. 1 ein nach rechts gerichteter, erster Winkelbereich von 70° und ein nach links gerichteter, zweiter Winkelbereich mit 20° dargestellt. Diese beiden Winkelbereiche sollen im folgenden als erster und zweiter Winkelbereich bezeichnet werden. Diesen Schwenkwinkeln des Hebelsarms 30 entsprechen die mit 20° und 70° bezeichneten Schwenkwinkel des Schwenkarms 38 von der mittleren Stellung 38 zur oberen Stellung 38' einerseits und zur unteren Stellung 38" andererseits. Die in Fig. 1 gezeigte Stellung des Hebelarms 30 kann als Neutralstellung bezeichnet werden, in der sich beispielsweise die nicht gezeigte Rückenlehne, die durch den Schwenkarm 38 verkörpert wird, in der unteren, flachen Stellung befindet.

Wird der Schlitten 26 nach rechts verfahren, so wird der Hebelarm 30 in der bereits geschilderten Weise über einen Winkel von 70° geschwenkt, bis sich der Schwenkarm 38 in der oberen Stellung 38' befindet. Während dieser gesamten Schwenkbewegung liegt das Kugellager 34 lediglich auf Druck gegen die Druckplatte 28 an. Die Rückkehr in die Ausgangsstellung erfolgt, bezogen auf das Beispiel der Rückenlehne eines Krankenbettes, unter Schwerkrafteinfluß.

Erfindungsgemäß soll die Antriebsvorrichtung jedoch nicht nur für diese zuvor geschilderte Schwenkvorrichtung der Rückenlehne, sondern für einen weiteren Antriebszweck verwendet werden. Zu diesem Zweck wird beispielsweise der Schlitten 26 durch weitere Drehung der Spindel 18 weiter nach links in Fig. 1 gezogen, so daß auch die Druckplatte 28 weiter nach links zurückweicht. Da jedoch der Schwenkarm 38 seine untere Endstellung, wie dargelegt, erreicht hat, und hier durch Auflage auf einen nicht gezeigten Rahmen festgehalten wird, kann auch der Hebelarm 30 nicht weiter nach links geschwenkt werden. Dies würde bedeuten, daß sich die Druckplatte und der Hebelarm trennen.

Um dies zu verhindern, ist erfindungsgemäß ein Kupplungsglied 40 vorgesehen, das für den folgenden Schwenkwinkel nach links von beispielsweise 20°, wie in Fig. 1 gezeigt ist, den Hebelarm 30 und die Druckplatte 28 koppelt, so daß der Hebelarm 30 durch den Schlitten 26 nach links gezogen werden kann. Dabei ist der in Fig. 1 gezeigte Winkel von 20°, der zuvor auch als zweiter Winkelbereich bezeichnet worden ist, nicht notwendigerweise derjenige Winkel, den der Hebelarm 30 im Raum zurücklegt. Der Schlitten 26 kann sich ggfs. auch an den Hebelarm 30 heranziehen, während dieser über die Welle 32 und den Schwenkarm 38 festgelegt ist. In jedem Falle entsteht dadurch eine zusätzliche Bewegung, die für einen zweiten Verstellvorgang ausgenutzt werden kann.

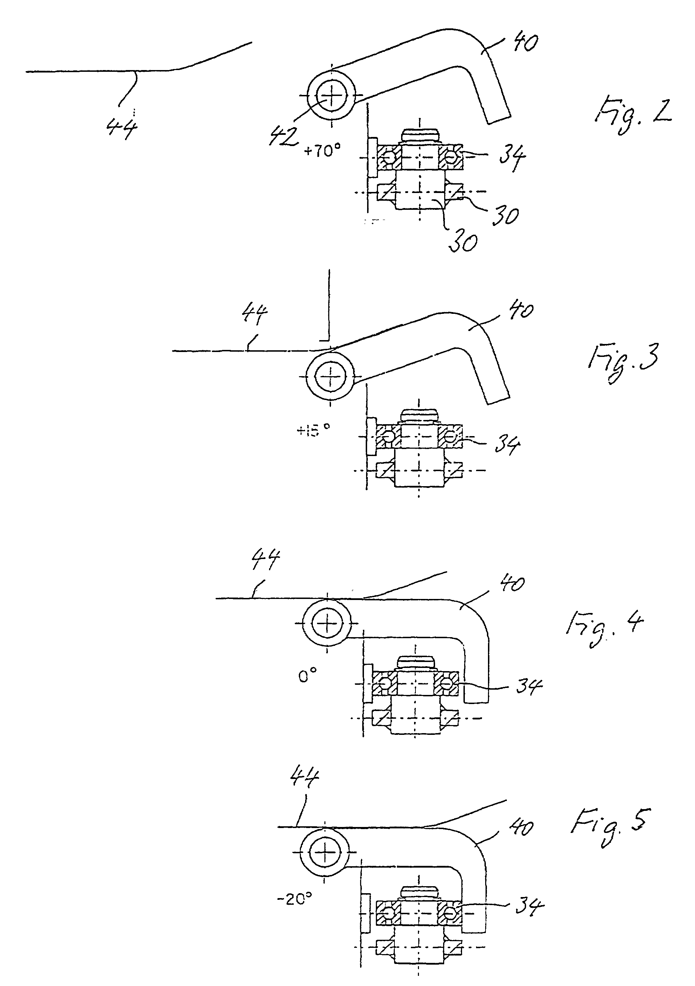

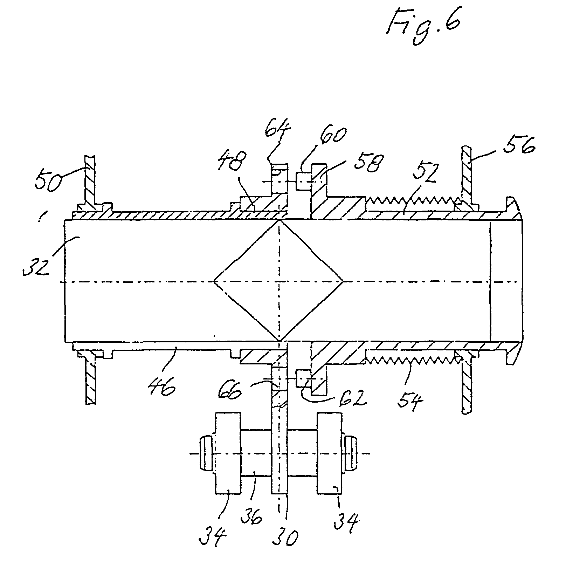

In Fig. 2 bis 4, die Teildarstellungen des erwähnten Kupplungsgliedes 40 zeigen, sind auch die in Fig. 1 enthaltenen Winkelangaben eingetragen. Im übrigen sind in einem waagerechten Schnitt die Druckplatte 28, das Kugellager 34 und der Hebelarm 30 erkennbar. Die Schnittebene ist also eine waagerechte Ebene durch die Achse des Kugellagers 34 in Fig. 1.

Das Kupplungsglied 40, das die Verbindung zwischen dem Hebelarm 30 und der Druckplatte 28 bzw. dem Schlitten 26 herstellt, ist ein schwenkbarer Haken, der auf einer am Schlitten 26 in nicht näher dargestellter Weise angebrachten Achse 42 gelagert ist.

Fig. 2 entspricht der Stellung von Schlitten 26 und Hebelarm 30, in der die Rückenlehne vollständig aufgerichtet ist (Pos. 38' des Schwenkarms). Hier steht das Kugellager 34 mit der Druckplatte 28 nur auf Druck in Verbindung. Dies gilt auch noch bei Annäherung an die neutrale Stellung in der Position des Winkels von 15° in Fig. 1. Von diesem Winkel an beginnt der Haken 40 auf eine Nockenkurve 44 aufzulaufen, die sich in nicht näher dargestellter Weise seitlich der Bewegungsbahn des Schlittens 26 befindet. Die Nockenkurve 44 drückt den Haken 40 bei der weiteren Bewegung des Schlittens 26 nach links in die Position der Fig. 4 und schließlich der Position der Fig. 5, die der Verschiebung aus der neutralen Stellung (Fig. 1) über den zweiten Winkelbereich von 20° nach links entspricht. In diesem Falle umgreift der Haken 40 das Kugellager 34, so daß der nach links fahrende Schlitten 26 das Kugellager 34 und damit den Hebelarm 30 nach links mitnimmt. In diesem Bereich ist also der Schlitten 26 mit dem Hebelarm 30 sowohl über die Druckplatte 28 auf Druck, als auch über den Haken 40 auf Zug verbunden. In Abweichung von Fig. 2 bis 5 können auf beiden Seiten des Hebelarms 30 Kugellager 34 in koaxialer Anordnung gelagert sein, die von beiden Seiten her durch Haken 40 umgriffen werden.

Wenn der Hebelarm 30 weiter durch den Antrieb herangezogen wird, wird der Schwenkarm 38 abwärts geschwenkt, bis er gegen ein geeignetes Teil des nicht dargestellten Bettgestells anschlägt. Dabei wird das Gehäuse 10 mit dem gesamten Antriebsmechanismus durch den Schwenkarm 38 angehoben. Wenn der Antriebsmechanismus an der Unterseite eines Einlegerahmens, insbesondere Lattenrostrahmens angebracht ist, wie es in der Praxis häufig - der Fall ist, wird nunmehr der Antriebsmechanismus zusammen mit dem Lattenrostrahmen in bezug auf das Bettgestell angehoben. Die Liegefläche gerät dadurch in eine schräg geneigte Stellung entsprechend der erwähnten Körperschräglage.

Fig. 6 ist ein schematischer Teilschnitt durch die Welle 32 und den Hebelarm 30. Durch das in die Welle 32 eingezeichnete Quadrat wird deren quadratischer Querschnitt veranschaulicht. Auf der Welle 32 befindet sich eine Lagerhülse 46, deren Innenquerschnitt in nicht gezeigter Weise dem Querschnitt der Welle entspricht, so daß die Lagerhülse drehfest gehalten ist, deren Außenfläche jedoch im Querschnitt kreisförmig ist. Im einzelnen besitzt die Lagerhülse 46 eine umlaufende Lagerfläche 48, auf der der Hebelarm 30 schwenkbar ist. Mit 50 ist eine Seitenwand des Gehäuses 1 bezeichnet, die von der Lagerhülse 46 durchdrungen wird.

Auf der rechten Seite in Fig. 6 befindet sich eine drehfest, jedoch axial verschiebbar auf der Welle 32 angebrachte Hülse 52, die durch Druckfedern 54 nach links in Fig. 6, also in Richtung des Hebelarms 30 vorgespannt ist. Die Druckfedern stützen sich an einer weiteren Seitenwand 56 des Gehäuses 10 ab, die von der verschiebbaren Hülse 52 durchdrungen wird. Auf der dem Hebelarm 30 zugewandten Seite befinden sich in einem ringsum vorspringenden Flansch 58 der Hülse 52 eine Anzahl von vorspringenden Zapfen 60 und 62, denen entsprechende Bohrungen 64 und 66 in dem Hebelarm 30 zugeordnet sind. Bei einer vorgegebenen Winkelstellung rasten die Zapfen 60.62 automatisch in die Bohrungen 64,66 ein. Wird die Hülse 52 nach rechts in Fig. 1 verschoben, so kommt der schwenkbare Hebelarm 30 frei. Dies ermöglicht eine Verstellung im Falle einer Störung, etwa bei Stromausfall. Die Zapfen 60,62 und die Bohrungen 64,66 sind so angeordnet, daß sie nach der Trennung stets wieder in einer vorgegebenen Winkelposition einrasten.

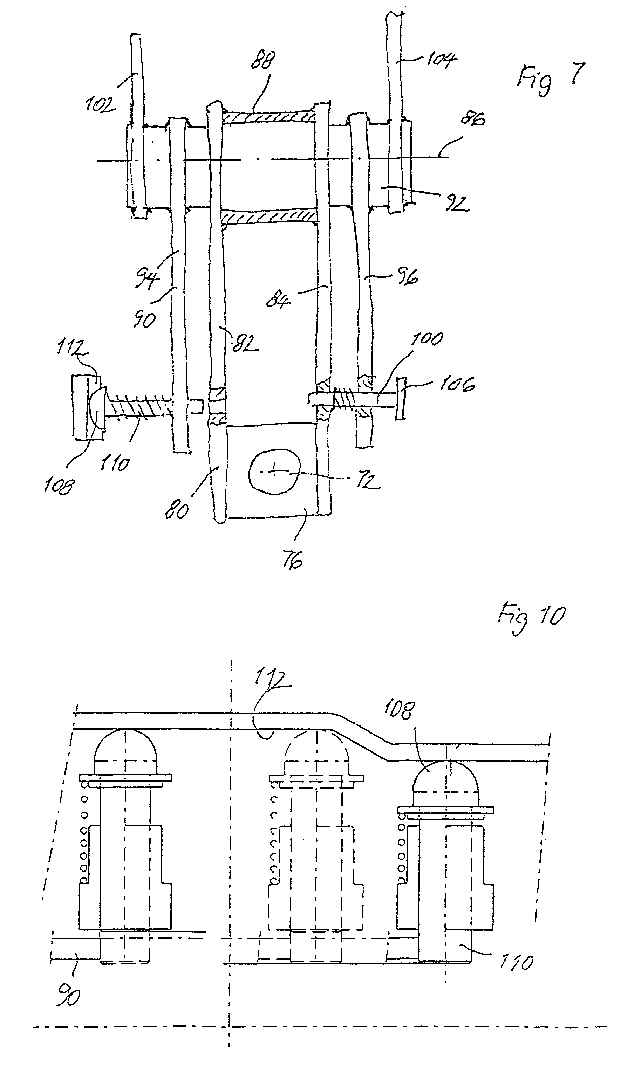

Fig. 7 bis 9 sind Stirn- und Seitenansicht einer anderen Ausführungsform einer erfindungsgemäßen Antriebsvorrichtung. Zur Erläuterung soll im wesentlichen auf die drei genannten Figuren gleichzeitig Bezug genommen werden.

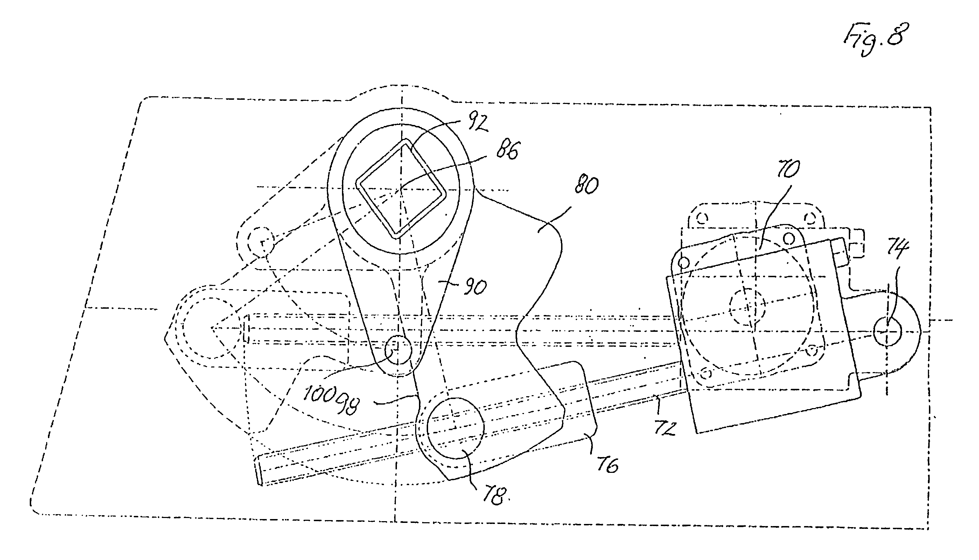

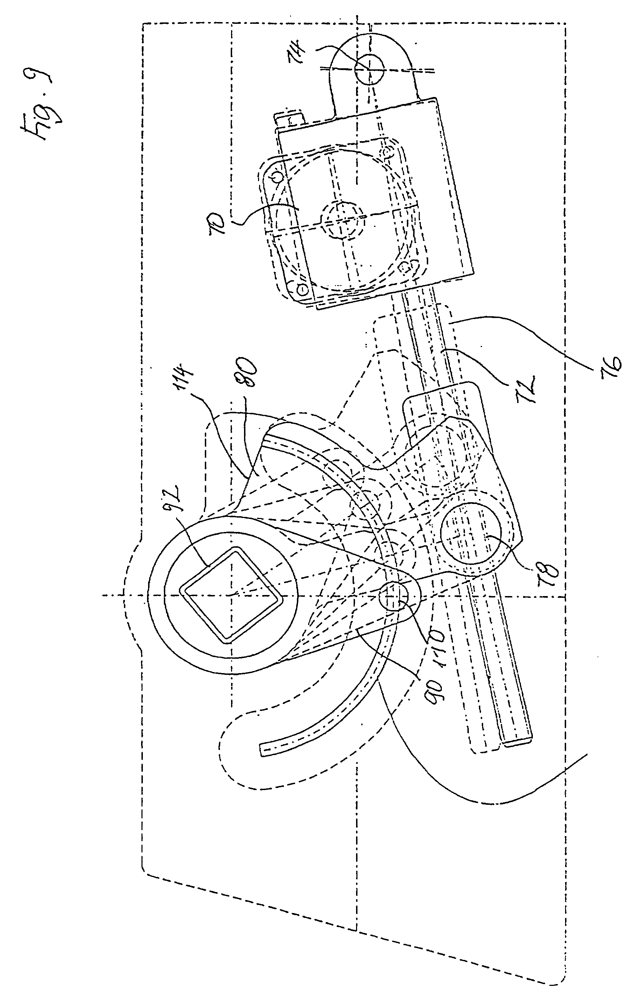

Fig. 8 und 9 zeigen Seitenansichten von ein- und derselben Seite, veranschaulichen jedoch die Situation auf den beiden gegenüberliegenden Seiten. Bei der hier beschriebenen Ausführungsform ist eine Anordnung aus einem Motor 70 und einer Gewindespindel 72 vorgesehen, die in ihrer Gesamtheit schwenkbar in einer Achse 74 in einem im einzelnen nicht dargestellten Gehäuse des Antriebs gelagert ist. Auf der Gewindespindel 72 befindet sich eine Spindelmutter 76, die durch Drehung der Gewindespindel nach links und rechts in Fig. 8 und 9 beweglich ist. Die Spindelmutter 76 ist über eine Achse 78 mit einem Druckhebel 80 verbunden.

Wie in Fig. 7 zu erkennen ist, wird der Druckhebel gebildet durch zwei parallele Platten 82,84, die um eine Achse 86 frei drehbar sind und die über die Spindelmutter 76 und gegebenenfalls auch durch eine Verbindungshülse 88. die in Fig. 7 schematisch angedeutet ist, zu einer Einheit zusammengefaßt sind.

Andererseits bildet die Achse 86 zugleich die Drehachse eines schwenkbaren Hebelarms 90, der ebenfalls aus zwei parallelen, über ein die Achse 86 umgebendes Vierkantrohr 92 starr verbundene Platten 94,96 zusammengesetzt ist.

Wenn bei Drehung des Motors 70 und der Spindel 72 die Spindelmutter 76 nach links in Fig. 8 bewegt wird, wird der Druckhebel 80, bestehend aus den beiden Platten 82,84, nach links in Fig. 8 oder in Uhrzeigerrichtung um die Achse 86 geschwenkt. Der Druckhebel 80 trifft dabei mit seiner linken Flanke in Fig. 8, die mit 98 bezeichnet ist. gegen einen Stift 100, der sich von dem schwenkbaren Hebelarm 90 aus in die Bahn des Druckhebels 80 erstreckt. Der Hebelarm 90 wird also zugleich mit dem Druckhebel 80 geschwenkt. Dabei dreht sich das Vierkantrohr 92 in Uhrzeigerrichtung. Auf den äußeren Enden des Vierkantrohres 92 beiderseits außerhalb des Hebelarms 90 sind lediglich angedeutete Schwenkarme 102,104 befestigt, die beispielsweise dazu dienen, das Fußende eines Lattenrosts in einem Bett anzuheben. Dies ist die Schwenkung des Hebelsarms 90 in dem eingangs definierten ersten Winkelbereich. Der Stift 100 wird durch eine Feder in die Bahn des Druckbebels 80 hinein vorgespannt. Er kann von Hand durch Erfassen eines Kopfes 106 des Stiftes unter Überwindung der Federkraft zurückgezogen werden, wenn beispielsweise die Hubbewegung rückgängig gemacht werden soll, das als Beispiel erwähnte Fußstück also abgesenkt werden soll, weil der Motorantrieb, etwa wegen eines Stromausfalls, außer Betrieb ist. Dieser Auslösevorgang kann auch mechanisiert werden.

Bei entgegengesetzter Drehung des Motors 70 und der Spindel 72 läuft die Spindelmutter 76 nach rechts in Fig. 8. Der Druckhebel 80 wird in Gegenuhrzeigersinn geschwenkt. Der Hebelarm 90 folgt dem Druckhebel ohne Zwangskopplung und allein aufgrund der Schwerkraft des zuvor angehobenen Teils. Trifft dieses auf ein Hindernis, so kann das angehobene Teil zusammen mit dem Hebelarm stehenbleiben, obgleich sich der Druckhebel weiter in Gegenuhrzeigerrichtung bewegt. Auf diese Weise werden Verletzungs- und Beschädigungsgefahren vermieden.

Wenn das von dem Hebelarm 90 angehobene Teil, im genannten Beispielsfall also das Fußstück eines Betten-Lattenrosts. seine untere Endstellung erreicht hat, liegt es auf einem nicht dargestellten Bettgestell oder einer anderweitigen Stützkonstruktion auf. Eine weitere Abwärtsbewegung ist nicht möglich.

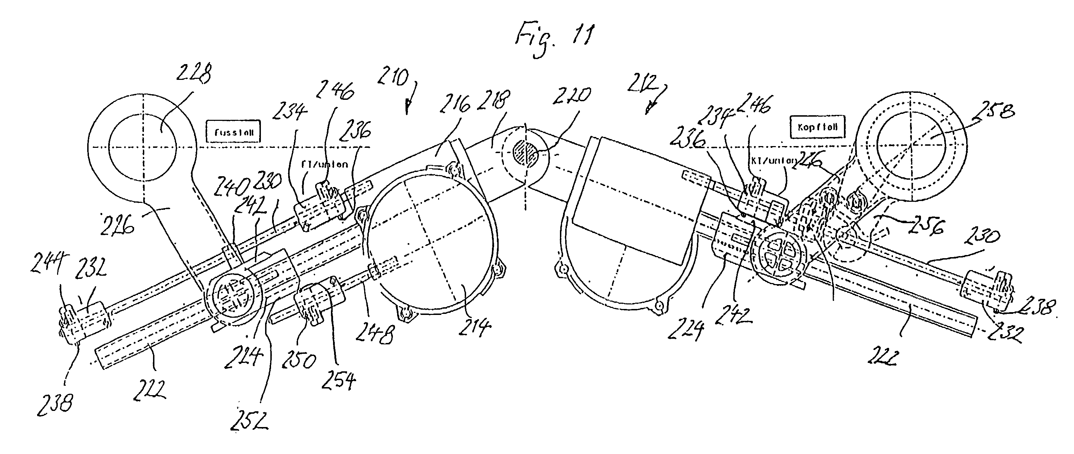

Kurz bevor die zurückgezogene Endstellung des ersten Winkelbereichs erreicht ist, läuft der Kopf 108 eines in der anderen Platte 94 des Hebelarms 90 verschiebbar geführten Stifts 110 auf eine Nockenfläche 112 auf (Fig. 10). Bei der weiteren Schwenkbewegung wird der Stift 110 entgegen Federwirkung vorgeschoben, bis er in die Bahn des Druckhebels 80 eintritt und von dessen Flanke 114 erfaßt wird (Fig. 9). Es sei noch einmal darauf hingewiesen, daß die Anordnung der beiden Stifte 100 und 110 in den beiden Platten 94 und 96 austauschbar ist. In Fig. 8 und 9 sind beide Stifte in der in diesen Figuren sichtbaren Platte 96 dargestellt. Bezogen auf die Darstellung in Fig. 7 ist daher Fig. 9 als eine Darstellung zu verstehen, in der der weiter hinten hinter der Zeichenebene liegende Bereich dargestellt ist.

Wenn somit der Stift 110 in die Bahn des Druckhebels 80 bzw. der Platte 82 eingetreten ist, wird der Hebelarm 90 wiederum durch den Druckhebel 80 in Gegenuhrzeigerrichtung mitgenommen. Da sich die Schwenkarme 102 und 104 auf dem Bettgestell oder einer anderen Stützkonstruktion abstützen, bewirkt die weitere Drehung des Vierkantrohres 92, daß sich das Teil, in dem dieses Vierkantrohr gelagert ist, bewegt. Üblicherweise ist der gesamte Antrieb an der Unterseite des Mittelteils oder Hauptteils eines Lattenrosts befestigt. Die Schwenkung des Hebelsarms im zweiten Winkelbereich bewirkt daher, daß der gesamte Lattenrost in bezug auf das Bettgestell angehoben und in eine in bezug auf das Bettgestell geneigte Stellung gebracht wird, wie es im Zusammenhang mit der ersten Ausführungsform geschildert wurde.

Diese angehobene, leicht zum Kopfteil hin geneigte Stellung des Hauptteils mit abgesenktem Fußteil wird beispielsweise in Krankenbetten zur gelegentlichen Entlastung des Körpers eines bettlägerigen Patienten benötigt. Beide Verstellbewegungen können mit Hilfe ein und desselben Antriebs vorgenommen werden. In dem zweitem Winkelbereich erfolgt die Kopplung zwischen dem Ausgangselement des Antriebsmotors, hier verkörpert durch den Druckhebel 80, und dem schwenkbaren Hebelarm 90 in Zugrichtung des Antriebs.

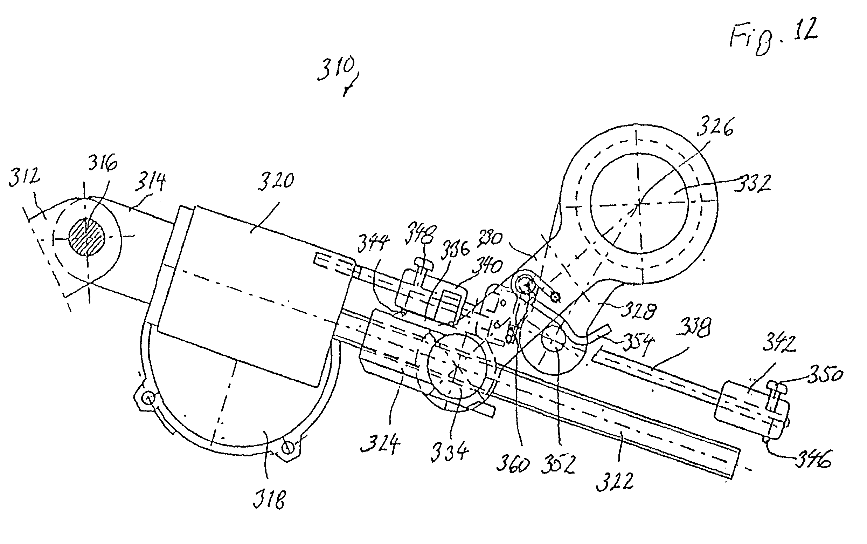

Fig. 11 zeigt vereinfacht einen Antrieb für zwei angetriebene Teile, etwa Kopfteil und Fußteil eines Bettes, und entspricht somit einer Verdoppelung des Antriebs gemäß Fig. 8 und 9.

Da die Zeichnung zwei im wesentlichen gleiche Antriebe 210,212 zeigt, die spiegelbildlich angeordnet sind und sich nur in geringfügigen Einzelheiten unterscheiden, soll vor allem der linke Antrieb 210 genauer beschrieben werden. Der linke Antrieb umfaßt eine zusammenhängende Einheit aus einem Motor 214 und einem Getriebe 216. Diese Einheit 214,216 ist über einen Tragarm 218 schwenkbar auf einer Achse 220 angeordnet, die sich quer durch das nicht dargestellte Getriebegehäuse erstreckt. Aus der Zeichnung geht im übrigen hervor, daß beide Antriebe 210,212 von gegenüberliegenden Seiten her auf dieser Achse 220 gelagert sind. Das hat den Vorteil, daß die bei Antriebsvorgängen auftretenden Kräfte einander wenigstens teilweise aufheben und nicht auf das Gerätegehäuse übertragen werden und dieses verformen.

Im übrigen bleibt die Position der beiden Antriebe 210,212 in bezug zueinander stets erhalten, ohne daß etwaige Verformungen des Gerätegehäuses Einfluß haben können, so daß auch auf diese Weise die Genauigkeit der Antriebsvorrichtung erhöht wird.

Aus dem Getriebe 216 tritt nach links unten in der Zeichnung eine drehbare Gewindespindel 222 aus. Auf der Gewindespindel 222 läuft eine Spindelmutter 224. Auf diese Weise wird die Drehbewegung des Motors 214 in eine lineare Bewegung der Spindelmutter 224 umgesetzt.

Die Spindelmutter 224 ist mit einem Hebel 226 verbunden, der drehfest auf einer Achse 228 angebracht ist, die beispielsweise die Schwenkachse eines Fußteils eines Bettes bildet. Da diese Achse 228 drehbar ist, aber ortsfest in dem nicht dargestellten Bettgestell gelagert ist, bewegt sich das äußere Ende des Hebels 226, das an der Spindelmutter befestigt ist, auf einer Kreisbahn um die Achse 228, der die Spindel 222 zusammen mit dem Getriebe 216 und dem Motor 214 durch Schwenkung um die Achse 220 folgt.

Aus dem Gehäuse des Getriebes 216 tritt oberhalb der Gewindespindel 222 parallel zu dieser eine Stange 230 aus, die etwa die gleiche Länge wie die Gewindespindel 222 aufweist. Auf dieser Stange sind zwei Endschalter 232, 234 befestigt, deren Betätiger 236,238 der Gewindespindel 222 zugewandt sind. Auf der oberen Seite der Spindelmutter 224 ist eine Führung 240 vorgesehen, die sich zusammen mit der Spindelmutter 224 entlang der Gewindespindel 222 bewegt, wenn diese gedreht wird. Die Führung 240 nimmt die Stange 230 auf und führt diese, so daß die Stange stets parallel zur Gewindespindel 222 gehalten wird.

Auf dem äußeren Umfang der Spindelmutter 224 ist eine als Nocken wirkende Schaltleiste 242 vorgesehen, die parallel zur Gewindespindel 222 gerichtet ist und an beiden längsseitigen Enden nicht bezeichnete, schräge Auflaufflächen aufweist. Die Betätiger 236,238 laufen bei entsprechender Stellung der Spindelmutter 224 auf der Gewindespindel 222 auf diese Schaltleiste 242 auf, so daß der jeweilige Schaltvorgang durch Niederdrücken, Halten oder Freigabe der Betätiger ausgelöst wird.

Auf diese Weise kann der Motor 214 abgeschaltet werden, wenn die Spindelmutter 224 auf der Gewindespindel 222 eine von zwei vorgegebenen Endpositionen erreicht hat, in denen die Schaltleiste 242 gegen einen der Betätiger 236,238 der Endschalter trifft. Diese Endpositionen der Spindelmutter entsprechen vorgegebenen Winkelstellungen der Achse 228 und damit des anhebbaren, nicht dargestellten Fußteils.

Da die Endschalter 232,234 nicht, wie bisher üblich, an dem nicht dargestellten Gerätegehäuse, sondern unmittelbar an der Einheit aus Motor 214 und Getriebe 216 angebracht sind und durch die Bewegung der Spindelmutter 224 geschaltet werden, können Verformungen des Gerätegehäuses keinen Einfluß haben. Die Einstellung der gewünschten Endposition ist im übrigen einfach, da es lediglich notwendig ist, eine Schraube 244,246 zu lösen, die sich in der Aufnahme der Endschalter befindet, die Endschalter auf der Stange 230 zu verschieben und in der geänderten Position erneut festzuklemmen.

Der links in der Zeichnung dargestellte Antrieb 210 weist insofern eine Besonderheit auf, als sich unterhalb der Gewindespindel 222 eine weitere, ähnlich angeordnete Stange 248 befindet, die ebenfalls in das Getriebe- oder das Motorgehäuse eingelassen ist und sich parallel zu der Gewindespindel 222 erstreckt. Diese Stange 248 ist erheblich kürzer als die bereits beschriebene Stange 230. Sie trägt ebenfalls einen Endschalter 250, der durch die Bewegung der Spindelmutter 224 geschaltet wird. Dieser Endschalter 250 kann eine beliebige weitere Schaltfunktion aufweisen, die im Verlauf der Anhebung und Absenkung des Fußteils gewünscht sein kann. Auch auf der.unteren Seite der Spindelmutter 224 befindet sich eine Schaltleiste 252, auf die der mit 254 bezeichnete Betätiger des unteren Endschalters 250 in einer vorgegebenen Position aufläuft.

Der rechte Antrieb 212 umfaßt ebenso wie der Linearantrieb 210 eine Stange 230 mit zwei Endschaltern 232,234. Der Aufbau ist im wesentlichen spiegelbildlich zu demjenigen des Antriebs 210.

Fig. 12 bezieht sich auf eine Antriebsvorrichtung mit zwei Antrieben, von denen nur der zweite Antrieb 310 im einzelnen gezeigt ist. Es kann sich beispielsweise um zwei gesonderte Antriebe für Kopfteil und Fußteil eines Krankenbetts handeln. Die beiden Antriebe sind jeweils über Tragarme 312,314 schwenkbar auf einer gemeinsamen, quer zum nicht dargestellten Bettgestell gerichteten Achse 316 gelagert. Die Antriebe sind im wesentlichen gleich. Der im einzelnen dargestellte Antrieb 310 für das Kopfteil umfaßt einen Elektromotor 318, dem ein Getriebe 320 nachgeschaltet ist. Aus dem Getriebe 320 tritt nach rechts unten in Fig. 12 eine drehbare Gewindespindel 322 aus. Mit der Gewindespindel 322 steht eine Spindelmutter 324 in Eingriff, die in Abhängigkeit von der Drehrichtung der Gewindespindel eine lineare, hin- und hergehende Bewegung auf der Gewindespindel 322 ausführt. Diese Spindelmutter 324 bildet das linear bewegliche Ausgangselement des Antriebs in dem oben angesprochenen Sinne.

Um eine gemeinsame geometrische Achse 326, die senkrecht zur Zeichenebene in Fig. 12 und quer zur Bettrichtung verläuft, sind zwei Hebel schwenkbar, von denen der kürzere als Schwenkhebel 328 und der längere als Antriebshebel 330 bezeichnet werden soll. Für das Verständnis der Erfindung ist es wesentlich, zu beachten, daß in der geometrischen Achse 326 eine Welle 332 verläuft. mit der der kürzere Schwenkhebel 328 drehfest verbunden und auf der der längere Antriebshebel 330 frei drehbar ist. Die Welle 332 ist beispielsweise fest mit dem Kopfteil eines Bettes verbunden, und zwar derart, daß eine Drehung der Welle 332 in Abhängigkeit von der Drehrichtung zum Schwenken des Kopfteils in Aufwärts- und Abwärtsrichtung führt.

Der frei auf der Welle 332 drehbare Antriebshebel 330 ist an seinem links unten in Fig. 12 liegenden Ende in einer Achse 334 schwenkbar mit der Spindelmutter 324 verbunden.

Auf diese Weise führt die Linearbewegung der Spindelmutter 324 auf der Gewindespindel 322 zu einer Schwenkung des Antriebshebels 330 um die Welle 332.

Auf der oberen Seite des Gehäuses der Spindelmutter 324 befindet sich eine parallel zur Gewindespindel 322 verlaufende Schaltleiste 336, deren Funktion anschließend erläutert werden soll.

An oder in dem nicht einzeln bezeichneten Gehäuse des Getriebes 320 ist eine parallel zur Gewindespindel gerichtete Stange 338 befestigt, auf der sich zwei Endschalter 340,342 befinden. Die Endschalter 340,342 weisen federnde Betätiger 344,346 auf, die auf der der Gewindespindel 322 zugewandten Seite der Endschalter austreten. Mit diesen Betätigern 344,346 wirkt die Schaltleiste 336 bei der Linearbewegung der Spindelmutter 324 auf der Gewindespindel 322 zusammen, wenn die Spindelmutter 324 jeweils eine ihrer vorbestimmten Endstellungen auf der Gewindespindel erreicht hat. Damit die Betätiger leicht auf die Schaltleiste 336 auflaufen und entsprechend einfedem und damit einen Schaltvorgang auslösen können, sind an beiden Enden der Schaltleiste 336 nicht bezeichnete schräge Auflauframpen vorgesehen.

Für die anfängliche Einstellung der beiden Endpunkte der Bewegung der Spindelmutter und ggfs. auch für spätere Nachjustierungen sind die beiden Endschalter 340,342 auf der Stange 338 in Längsrichtung verstellbar. Zu diesem Zweck sind Schrauben 348,350 vorgesehen, die in die Aufnahmen der beiden Endschalter 340,342 eingeschraubt und gegen die Stange 338 zum Festlegen der Endschalter verspannt werden können.

Es wurde bereits darauf hingewiesen, daß der Schwenkhebel 328 und der Antriebshebel 330 voneinander unabhängig schwenkbar sind, da der Schwenkhebel 328 auf der Welle 332 drehfest angebracht ist, während der Antriebshebel 330 um die Welle 332 frei drehbar ist. An dem Schwenkhebel 328 befindet sich jedoch ein in Richtung des Antriebshebels 330 weisender Anschlag 352, der von dem Antriebshebel 330 auf seiner linken Seite erfaßt wird, wenn der Antriebshebel 330 aus der in Fig. 12 gezeigten Stellung weiter in Gegenuhrzeigerrichtung geschwenkt wird. Wenn daher die Spindelmutter 324 auf der Gewindespindel 322 durch Drehung der Gewindespindel 322 nach rechts unten in Fig. 12 verschoben wird, werden die beiden Hebel 328,330 in Gegenuhrzeigerrichtung geschwenkt und das als Beispiel erwähnte, nicht dargestellte Kopfteil des Bettes wird angehoben. Dabei bewirkt das Eigengewicht des Kopfteils, ggfs. mit zusätzlicher Belastung durch einen Patienten, daß der Anschlag 352 des Schwenkhebels 328 stets fest gegen den Antriebshebel 330 anliegt.

Wenn das Kopfteil abgesenkt werden soll, läuft die Spindelmutter 324 nach links in Fig. 12. Sie schwenkt dabei den Antriebshebel 330 in Uhrzeigerrichtung, und das Eigengewicht des Kopfteils bewirkt, daß der Schwenkhebel 328 dieser Schwenkbewegung zusammen mit dem Kopfteil folgt.

Es kann jedoch der Fall eintreten, daß das Kopfteil durch Verkantung oder durch ein zwischen das Kopfteil und das Bettgestell eingetretenes Hindernis zumindest vorübergehend festgehalten wird und dem Antriebshebel 330 nicht mehr unter Einwirkung der Schwerkraft folgt. Dadurch wird die Absenkbewegung des Antriebs außer Funktion gesetzt. Es ist dabei auch möglich, daß sich das Hindernis löst und das Kopfteil ruckartig herabfällt, bis der Anschlag 352 des Schwenkhebels 328 wieder auf den Antriebshebel 330 trifft.

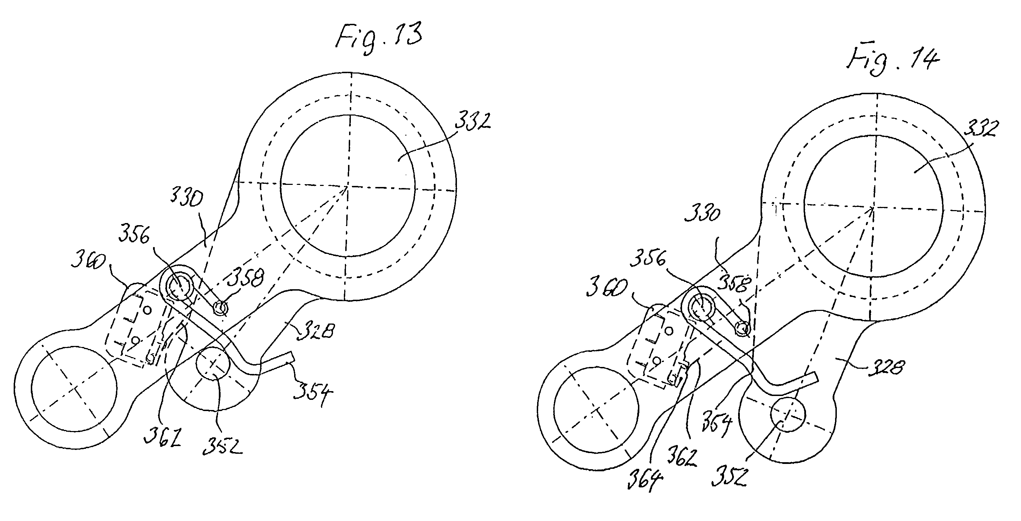

Beide Möglichkeiten sollen durch die vorliegende Erfindung ausgeschaltet werden. Wenn das Kopfteil hängenbleibt, soll der Absenkvorgang unterbrochen werden, damit das Hindernis beseitigt werden kann. Wie diese Funktion verwirklicht wird, ergibt sich insbesondere aus Fig. 13 und 14, die im wesentlichen nur die beiden Hebel 328,330 aus Fig. 12 zeigen.

Fig. 13 und 14 zeigen zum einen eine Feder 354, die mit Hilfe eines Stifts 356 und einer Bohrung 358 an dem Antriebshebel 330 befestigt ist und um den Anschlag 352 an dem anderen Hebel, d.h., dem Schwenkhebel 328 herumgelegt ist. Die Feder 354 ist so geformt, daß sie bestrebt ist. die beiden Hebel 328,330 in der in Fig. 13 oder auch in der in Fig. 12 gezeigten, zusammenwirkenden Stellung zusammenzuhalten. Dadurch soll vermieden werden, daß das Kopfteil bei der Absenkbewegung bereits bei geringfügigen Hindernissen hängenbleibt und der Antrieb zu häufig abgeschaltet wird.

Im übrigen ist an dem Antriebshebel 330 auf der in Fig. 13 und 14 abgelegenen Rückseite dieses Hebels ein Schalter 360 befestigt, an dessen nach rechts unten in Fig. 13 und 14 gerichteten Seite ein Blechstreifen 362 befestigt ist, der in der Bewegungsebene des Schwenkhebels 328 liegt und durch diesen niedergedrückt wird, wenn die beiden Hebel 328,330 in der Ausgangsstellung gemäß Fig. 13 liegen. Der Blechstreifen 362 wirkt auf einen aus dem Gehäuse des Schalters 360 austretenden Betätiger 364 ein. Wenn dieser Betätiger 364 eingedrückt wird, wie es in der Ausgangsstellung gemäß Fig. 13 der Fall ist, ist der Stromkreis des Elektromotors 318 geschlossen, so daß der Antrieb in Aufwärts- und Abwärtsrichtung des Kopfteils betätigbar ist.

Wenn das Kopfteil hängenbleibt, tritt, übertrieben dargestellt, die in Fig. 14 gezeigte Situation ein, in der der Antriebshebel 330 weit in Uhrzeigerrichtung vorausgelaufen ist, während der Schwenkhebel 328 stehengeblieben ist. Dadurch federt der Blechstreifen 362 aus, und der Betätiger 364 wird freigegeben. Der Stromkreis des Antriebs wird unterbrochen, und der Antrieb bleibt stehen.

Wie erwähnt, ist diese Situation in Fig. 14 übertrieben dargestellt. Es ist ersichtlich, daß bei der dargestellten Konstellation die Unterbrechung bereits in einem wesentlich früheren Stadium eingetreten wäre.

Die Fig. 12 bis 14 beziehen sich auf ein Anwendungsbeispiel der vorliegenden Erfindung. Insbesondere ist die Erfindung nicht beschränkt auf eine Doppelhebel-Konstruktion der dargestellten Art. Beispielsweise wird in der DE 196 47 544 C1 ein vergleichbarer Antrieb beschrieben, bei dem das linear bewegliche Ausgangselement des Antriebs unmittelbar auf einen Schwenkhebel einwirkt.

Bei dem zuvor im einzelnen dargestellten Beispiel wird die lineare Bewegung des Ausgangselements 324 des Antriebs in eine Schwenkbewegung der beiden Hebel 330 und 328 umgesetzt. Die Erfindung ist jedoch gleichermaßen anwendbar auf Antriebszüge, in der das linear bewegliche Ausgangselement 324 ein weiteres linear bewegliches Bauteil bewegt.

Eine weitere Abwandlung der vorliegenden Erfindung ist dahingehend möglich, daß die Rückzugsbewegung zwangsweise erfolgt, während die Vorschubbewegung der Schwerkraft überlassen wird.

An die Stelle der Schwerkraft kann in einem erfindungsgemäßen System auch eine Feder treten. Die Schwerkraft kann auch in der Weise eingesetzt werden, daß die Rückzugsbewegung des angetriebenen Teils durch ein der Schwerkraft ausgesetztes Gewicht über ein umgelenktes Seil oder dergleichen erfolgt.

## Patentansprüche

1. Antriebsvorrichtung für hin- und hergehende Schwenkbewegungen, insbesondere zum Verstellen von Krankenbetten und anderen Möbelstücken, mit einem Motor (12), einem diesem nachgeschalteten Getriebe (14,16,18,24) zur Umwandlung der Drehbewegung des Motors in eine Linearbewegung und einem mit einem linear beweglichen Ausgangselement (28;76,80;224;324) des Getriebes verbundenen, schwenkbaren Hebelarm (30,90), wobei der schwenkbare Hebelarm in einem ersten Winkelbereich der Schwenkbewegung mit dem Ausgangselement nur in Vorschubrichtung in Antriebsverbindung steht und wobei der Hebelarm in einem zweiten Winkelbereich bewegbar ist, **dadurch gekennzeichnet, daß** der erste Winkelbereich von einer vorgegebenen Stellung des Hebelarmes aus in eine Drehrichtung und der zweite Winkelbereich von der vorgegebenen Stellung des Hebelarmes aus in die entgegengesetzte Richtung gerichtet ist, und daß ein bewegliches Kupplungsglied (40, 110) vorgesehen ist, das in dem zweiten, von der vorgegebenen Stellung des Hebelarmes ausgehenden Winkelbereich das Ausgangselement (28; 76 80;224;324), und den Hebelarm (30, 90) in Zugrichtung miteinander koppelt.

2. Antriebsvorrichtung nach Anspruch 1, **dadurch gekennzeichnet, daß** das Kupplungsglied (40) an dem Ausgangselement (28;76,80) oder dem Hebelarm (30.90) vorgesehen ist.

3. Vorrichtung nach Anspruch 2, **dadurch gekennzeichnet, daß** das Kupplungsglied (40) an dem Ausgangselement (28) angebracht ist und bei Eintritt des Ausgangselements in die dem zweiten Winkelbereich entsprechende Stellung des Hebelarmes auf eine die Koppelung bewirkende Nockenkurve (44) aufläuft.

4. Antriebsvorrichtung nach Anspruch 3, **dadurch gekennzeichnet, daß** das Kupplungsglied (40) als schwenkbarer Haken ausgebildet ist, der den Hebelarm (30) beim Eintritt in den zweiten Winkelbereich umgreift.

5. Antriebsvorrichtung nach einem der vorhergehenden Ansprüche, **dadurch gekennzeichnet, daß** der Hebelarm (30) in Richtung des Ausgangselements (28) des Getriebes in dem ersten Winkelbereich vorgespannt ist.

6. Antriebsvorrichtung nach einem der vorhergehenden Ansprüche, **dadurch gekennzeichnet, daß** der Hebelarm (30) mit einer Welle (32) über einen entriegelbaren Kupplungsmechanismus (52,60,62,64,66) verbunden ist.

7. Antriebsvorrichtung nach Anspruch 6, **dadurch gekennzeichnet, daß** der Hebelarm (30) drehbar auf der Welle (32) gelagert ist und daß der Kupplungsmechanismus (52,60,62,64,66) eine drehfest und axial verschiebbar auf der Welle (32) angebrachte Hülse (52) umfaßt, die in Richtung des Hebelarms vorgespannt ist und Eingriffsglieder (60,62) aufweist, die korrespondierenden Eingriffsgliedern (64,66) am Hebelarm (30) zugeordnet sind.

8. Antriebsvorrichtung nach einem der vorhergehenden Ansprüche, **dadurch gekennzeichnet, daß** das linear bewegliche Ausgangselement des Motors eine auf einer von dem Motor (70) angetriebenen Gewindespindel (72) angeordnete Spindelmutter (76;224) umfaßt, die mit einem um die Achse (86) des Hebelarms (90) schwenkbaren Druckhebel (80) verbunden ist, und daß der schwenkbare Hebelarm (90) in dem ersten Winkelbereich seiner Schwenkbewegung mit dem Druckhebel (80) nur in Vorschubrichtung und in einem zweiten Winkelbereich in Zugrichtung in Antriebsverbindung steht.

9. Antriebsvorrichtung nach Anspruch 8, **dadurch gekennzeichnet, daß** von dem schwenkbaren Hebelarm (90) ein federnd in die Bahn des Druckhebels (80) vorgespannter, gegen die Federwirkung zurückziehbarer erster Stift (100) zur Kopplung des schwenkbaren Hebelsarms (90) und des Druckhebels (80) bei der Vorschubbewegung innerhalb des ersten Winkelbereichs ausgeht.

10. Antriebsvorrichtung nach Anspruch 8 oder 9, **dadurch gekennzeichnet, daß** an dem schwenkbaren Hebelarm (90) ein in eine zurückgezogene Position federnd vorgespannter zweiter Stift (110) angeordnet ist und daß seitlich der Bewegungsbahn des schwenkbaren Hebelarms (90) eine Nockenfläche (112) vorgesehen ist, auf die der zweite Stift beim Eintritt des schwenkbaren Hebelsarms (90) in den zweiten Winkelbereich aufläuft, derart, daß der zweite Stift in die Bahn des Druckhebels (80) vorgeschoben wird.

11. Antriebsvorrichtung nach einem der Ansprüche 8 bis 10, **dadurch gekennzeichnet, daß** der Druckhebel (80) zwei parallele Platten (82,84) umfaßt, die von beiden Seiten her an der Spindelmutter (76) befestigt sind.

12. Antriebsvorrichtung nach Anspruch 11, **dadurch gekennzeichnet, daß** die beiden Platten (82,84) des Druckhebels (80) fest mit einer die Achse des Hebelarms (90) konzentrisch umgebenden Hülse (88) verbunden sind.

13. Antriebsvorrichtung nach einem der Ansprüche 8 bis 12, **dadurch gekennzeichnet, daß** der schwenkbare Hebelarm (90) zwei parallele Platten (94,96) umfaßt, die fest mit einer gemeinsamen Welle (92), insbesondere einem Vierkantrohr verbunden sind und auf beiden Seiten außerhalb der Anordnung aus den beiden Platten (82,84) des Druckhebels angeordnet sind.

14. Antriebsvorrichtung nach einem der Ansprüche 8 bis 13, mit einer Anzahl von Endschaltern (232,234;250) zur Beendigung des Motorbetriebs in vorgegebenen Endstellungen der Antriebe, **dadurch gekennzeichnet, daß** die Endschalter (232,234;250) auf wenigstens einer Stange (230,248) angeordnet sind, die sich vom Motor oder vom Getriebe (216) aus parallel zur Gewindespindel (222) erstrecken.

15. Antriebsvorrichtung nach Anspruch 14, **dadurch gekennzeichnet, daß** auf der Spindelmutter (224) eine Führung (240) vorgesehen ist, die die Stange (230) aufnimmt und parallel zur Gewindespindel (222) hält.

16. Antriebsvorrichtung nach einem der Ansprüche 14 oder 15, **dadurch gekennzeichnet, daß** auf dem äußeren Umfang der Spindelmutter (224) Schaltleisten (242,252) vorgesehen sind, die bei der Bewegung der Spindelmutter (224) auf der Gewindespindel (222) mit Betätigern (236,238;254) der Endschalter (232,234;250) zusammenwirken.

17. Antriebsvorrichtung nach einem der Ansprüche 14 bis 16, bei der zwei in entgegengesetzter Richtung wirkende Antriebe (210,212) zum Anheben von Kopf- und/oder Fußteil eines Bettes oder dergleichen vorgesehen sind, **dadurch gekennzeichnet, daß** die beiden Antriebe (210,212) auf einer gemeinsamen Achse (220) gelagert sind, und daß die Gewindespindeln (222) zu entgegengesetzten Seiten gerichtet sind.

18. Antriebsvorrichtung nach einem der Ansprüche 8 bis 17, **dadurch gekennzeichnet, daß** zwischen dem Ausgangselement (324) des Getriebes (320) und dem Schwenkhebel (328) ein Schalter (360) vorgesehen ist, der bei Zurückbleiben des Schwenkhebels (328) bei der Zurückzugsbewegung des Ausgangselements (324) einen Schaltvorgang auslöst.

19. Antriebsvorrichtung nach Anspruch 18, **dadurch gekennzeichnet, daß** der Schalter (360) an dem linear beweglichen Ausgangselement (324) angebracht und beim Zusammentreffen des Ausgangselements (324) mit dem Schwenkhebel (328) betätigbar ist.

20. Antriebsvorrichtung nach Anspruch 18, **dadurch gekennzeichnet, daß** das Ausgangselement (324) an einem Antriebshebel (330) befestigt ist, der durch das Ausgangselement (324) schwenkbar ist und seinerseits den Schwenkhebel (328) in Vorschubrichtung über zusammenwirkende Anschläge (352) mitnimmt.

## Claims

1. Driving device for reciprocal pivoting movements, especially for the adjustment of hospital beds and other items of furniture, having a motor (12), a gear mechanism (14, 16, 18, 24) connected in series therewith for converting the rotary motion of the motor into a linear motion, and a pivotable lever arm (30, 90) connected to a linearly movable output element (28, 76, 80; 224; 324) of the gear mechanism, wherein the pivotable lever arm is in driving connection in a first angular range of the pivoting movement with the output element only in the advance direction and wherein the lever arm is movable in a second angular range, **characterised in that** the first angular range is directed from a pre-set position of the lever arm in one direction of rotation and the second angular range is directed from the pre-set position of the lever arm in the opposite direction, and **in that** a movable coupling member (40,110) is provided, which, in the second angular range starting from the pre-set position of the lever arm, couples the output element (28; 76, 80; 224; 324) and the lever arm (30, 90) with one another in the pulling direction.

2. Driving device according to claim 1, **characterised in that** the coupling member (40) is provided on the output element (28; 76, 80) or the lever arm (30, 90).

3. Device according to claim 2, **characterised in that** the coupling member (40) is mounted on the output element (28) and, as the output element enters the position of the lever arm corresponding to the second angular range, runs onto a cam curve (44) effecting the coupling.

4. Driving device according to claim 3, **characterised in that** the coupling member (40) is in the form of a pivotable hook that engages around the lever arm (30) on entry into the second angular range.

5. Driving device according to any one of the preceding claims, **characterised in that** the lever arm (30) is biased towards the output element (28) of the gear mechanism in the first angular range.

6. Driving device according to any one of the preceding claims, **characterised in that** the lever arm (30) is connected to a shaft (32) by way of a disengageable coupling mechanism (52, 60, 62, 64, 66).

7. Driving device according to claim 6, **characterised in that** the lever arm (30) is mounted rotatably on the shaft (32) and **in that** the coupling mechanism (52, 60, 62, 64, 66) comprises a sleeve (52) mounted non-rotatably and axially displaceably on the shaft (32), which sleeve is biased towards the lever arm and comprises engagement members (60, 62) with which are associated with corresponding engagement members (64, 66) on the lever arm (30).

8. Driving device according to any one of the preceding claims, **characterised in that** the linearly movable output element of the motor comprises a spindle nut (76; 224) arranged on a threaded spindle (72) driven by the motor (70), which spindle nut is connected with a pressure lever (80) pivotable about the axis (86) of the lever arm (90), and **in that** the pivotable lever arm (90) is in driving connection in the first angular range of its pivoting movement with the pressure lever (80) only in the advance direction and in a second angular range in the pulling direction.

9. Driving device according to claim 8, **characterised in that** a first pin (100) biased resiliently into the path of the pressure lever (80) and retractable against the spring action extends from the pivotable lever arm (90) for coupling the pivotable lever arm (90) and the pressure lever (80) during the advance movement within the first angular range.

10. Driving device according to claim 8 or 9, **characterised in that** a second pin (110) resiliently biased into a retracted position is arranged on the pivotable lever arm (90), and **in that** laterally of the movement path of the pivotable lever arm (90) there is provided a cam surface (112), onto which the second pin runs as the pivotable lever arm (90) enters the second angular range, such that the second pin is advanced into the path of the pressure lever (80).

11. Driving device according to any one of claims 8 to 10, **characterised in that** the pressure lever (80) comprises two parallel plates (82, 84) that are secured to a respective side of the spindle nut (76).

12. Driving device according to claim 11, **characterised in that** the two plates (82, 84) of the pressure lever (80) are fixedly connected to a sleeve (88) concentrically surrounding the axis of the lever arm (90).

13. Driving device according to any one of claims 8 to 12, **characterised in that** the pivotable lever arm (90) comprises two parallel plates (94, 96) that are fixedly connected to a common shaft (92), especially a square tube, and are arranged on both sides outside the arrangement comprising the two plates (82, 84) of the pressure lever.

14. Driving device according to any one of claims 8 to 13, having a number of limit switches (232, 234; 250) for terminating the motor drive in predetermined end positions of the drives, **characterised in that** the limit switches (232, 234; 250) are arranged on at least one bar (230, 248) that extends from the motor or from the gear mechanism (216) parallel to the threaded spindle (222).

15. Driving device according to claim 14, **characterised in that** a guide means (240) that receives the bar (230) and holds it parallel to the threaded spindle (222) is provided on the spindle nut (224).

16. Driving device according to one of claims 14 or 15, **characterised in that** switching strips (242, 252) are provided on the outer circumference of the spindle nut, which on movement of the spindle nut (224) on the threaded spindle (222) co-operate with actuators (236, 238; 254) of the limit switches (232, 234; 250).

17. Driving device according to any one of claims 14 to 16, in which two drives (210, 212) acting in opposing directions are provided for raising the head part and/or foot part of a bed or the like, **characterised in that** the two drives (210, 212) are mounted on a common axle (220) and **in that** the threaded spindles (222) are directed to opposing sides.

18. Driving device according to any one of claims 8 to 17, **characterised in that** a switch (360) is provided between the output element (324) of the gear mechanism (320) and the pivoting lever (328), which switch initiates a switching process when the pivoting lever (328) remains behind on the retracting movement of the output element (324).

19. Driving device according to claim 18, **characterised in that** the switch (360) is mounted on the linearly movable output element (324) and is operable as the output element (324) meets the pivoting lever (238).

20. Driving device according to claim 18, **characterised in that** the output element (324) is secured to a drive lever (330) that is pivotable by the output element (324) and in its turn carries with it the pivoting lever (328) in the advance direction by way of co-operating stops (352).

## Revendications

1. Dispositif de commande pour des mouvements pivotants en va-et-vient, en particulier pour positionner des lits de malades et d'autres meubles, comprenant un moteur (12), un engrenage (14, 16, 18, 24) monté en aval de celui-ci pour convertir le mouvement de rotation du moteur en un mouvement linéaire, et un bras de levier pivotant (30, 90) relié à un élément de sortie à mouvement linéaire (28 ; 76, 80 ; 224 ; 324) de l'engrenage, le bras de levier pivotant n'étant, dans une première zone angulaire du mouvement pivotant, en liaison d'entraînement avec l'élément de sortie que dans la direction de poussée, et le bras de levier étant mobile dans une seconde zone angulaire, **caractérisé en ce que** la première zone angulaire est orientée, à partir d'une position prédéfinie du bras de levier, dans une direction de rotation, et la seconde zone angulaire est orientée, à partir de la position prédéfinie du bras de levier, dans la direction opposée, et **en ce qu'**il est prévu un organe d'accouplement mobile (40, 110) qui, dans la seconde zone angulaire partant de la position prédéfinie du bras de levier, accouple entre eux l'élément de sortie (28 ; 76, 80 ; 224 ; 324) et le bras de levier (30, 90) dans la direction de traction.

2. Dispositif de commande selon la revendication 1, **caractérisé en ce que** l'organe d'accouplement (40) est disposé sur l'élément de sortie (28 ; 76, 80) ou sur le bras de levier (30, 90).

3. Dispositif selon la revendication 2, **caractérisé en ce que** l'organe d'accouplement (40) est monté sur l'élément de sortie (28) et, lors du passage de l'élément de sortie dans la position du bras de levier correspondant à la seconde zone angulaire, monte sur une came (44) créant l'accouplement.

4. Dispositif de commande selon la revendication 3, **caractérisé en ce que** l'organe d'accouplement (40) est conçu sous la forme d'un crochet pivotant qui, lors de son passage dans la seconde zone angulaire, entoure le bras de levier (30).

5. Dispositif de commande selon une des revendications précédentes, **caractérisé en ce que** le bras de levier (30) est précontraint en direction de l'élément de sortie (28) de l'engrenage dans la première zone angulaire.

6. Dispositif de commande selon une des revendications précédentes, **caractérisé en ce que** le bras de levier (30) est relié à un arbre (32) par l'intermédiaire d'un mécanisme d'accouplement déverrouillable (52, 60, 62, 64, 66).

7. Dispositif de commande selon la revendication 6, **caractérisé en ce que** le bras de levier (30) est monté tournant sur l'arbre (32), et **en ce que** le mécanisme d'accouplement (52, 60, 62, 64, 66) comprend un manchon (52), lequel est monté sans possibilité de rotation et avec possibilité de coulissement axial sur l'arbre (32), est précontraint en direction du bras de levier et comporte des organes d'accrochage (60, 62) qui sont associés à des organes d'accrochage correspondants (64, 66) sur le bras de levier (30).

8. Dispositif de commande selon une des revendications précédentes, **caractérisé en ce que** l'élément de sortie à mouvement linéaire du moteur comprend un logement de tige filetée (76 ; 224) qui est disposé sur une tige filetée (72) entraînée par le moteur (70) et qui est relié à un levier de pression (80) pivotant autour de l'axe (86) du bras de levier (90), et **en ce que** le bras de levier pivotant (90) n'est en liaison d'entraînement avec le levier de pression que dans la direction de poussée dans la première zone angulaire de son mouvement pivotant et dans la direction de traction dans une seconde zone angulaire.

9. Dispositif de commande selon la revendication 8, **caractérisé en ce qu'**un premier doigt (100) précontraint élastiquement vers la trajectoire du levier de pression (80), rétractable à l'encontre de l'effet élastique, part du bras de levier pivotant (90) pour accoupler le bras de levier pivotant (90) et le levier de pression (80) lors du mouvement de poussée à l'intérieur de la première zone angulaire.

10. Dispositif de commande selon la revendication 8 ou 9, **caractérisé en ce que** sur le bras de levier pivotant (90) est disposé un second doigt (110) précontraint élastiquement vers une position rétractée, et **en ce que**, latéralement à la trajectoire de déplacement du bras de levier pivotant (90), est prévue une surface formant came (112), sur laquelle monte le second doigt lors du passage du bras de levier pivotant (90) dans la seconde zone angulaire, de façon que le second doigt soit poussé sur la trajectoire du levier de pression (80).

11. Dispositif de commande selon une des revendications 8 à 10, **caractérisé en ce que** le levier de pression (80) comprend des plaques parallèles (82, 84) qui sont fixées de part et d'autre du logement de tige filetée (76).

12. Dispositif de commande selon la revendication 11, **caractérisé en ce que** les deux plaques (82, 84) du levier de pression (80) sont solidarisées à un manchon (88) entourant concentriquement l'axe du bras de levier (90).

13. Dispositif de commande selon une des revendications 8 à 12, **caractérisé en ce que** le bras de levier pivotant (90) comprend deux plaques parallèles (94, 96) qui sont solidarisées à un arbre commun (92), en particulier à un tube carré, et qui sont disposées de part et d'autre des deux plaques (82, 84) du levier de pression, extérieurement à celles-ci.

14. Dispositif de commande selon une des revendications 8 à 13, comprenant une pluralité de contacteurs de fin de course (232, 234 ; 250) pour mettre fin au fonctionnement du moteur dans des positions extrêmes prédéfinies des moyens d'entraînement, **caractérisé en ce que** les contacteurs de fin de course (232, 234 ; 250) sont disposés sur au moins une tige (230, 248) qui s'étend à partir du moteur ou de l'engrenage (216) parallèlement à la tige filetée (222).

15. Dispositif de commande selon la revendication 14, **caractérisé en ce que** sur le logement de tige filetée (224) est prévu un guide (240) qui reçoit la tige (230) et la maintient parallèle à la tige filetée (222).

16. Dispositif de commande selon une des revendications 14 ou 15, **caractérisé en ce que** sur la périphérie extérieure du logement de tige filetée (224) sont prévues des nervures de contact (242, 252) qui, lors du déplacement du logement de tige filetée (224) sur la tige filetée (222), coopèrent avec des actionneurs (236, 238 ; 254) des contacteurs de fin de course (232, 234 ; 250).

17. Dispositif de commande selon une des revendications 14 à 16, dans lequel deux moyens d'entraînement (210, 212) agissant dans des directions opposées sont prévus pour lever la partie de tête et/ou de pied d'un lit ou analogue, **caractérisé en ce que** les deux moyens d'entraînement (210, 212) sont montés sur un axe commun (220), et **en ce que** les tiges filetées (222) sont orientées vers des côtés opposés.

18. Dispositif de commande selon une des revendications 8 à 17, **caractérisé en ce qu'**entre l'élément de sortie (324) de l'engrenage (320) et le levier pivotant (328) est prévu un commutateur (360) qui, lorsque le levier pivotant (328) reste en arrière lors du mouvement de rappel en traction de l'élément de sortie (324), déclenche une opération de commutation.

19. Dispositif de commande selon la revendication 18, **caractérisé en ce que** le commutateur (360) est monté sur l'élément de sortie à mouvement linéaire (324) et peut être actionné lors de la rencontre de l'élément de sortie (324) avec le levier pivotant (328).

20. Dispositif de commande selon la revendication 18, **caractérisé en ce que** l'élément de sortie (324) est fixé à un levier d'entraînement (330) qui peut pivoter par l'intermédiaire de l'élément de sortie (324) et, pour sa part, entraîne le levier pivotant (328) dans la direction de poussée par l'intermédiaire de butées à action conjointe (352).
